# EUROPEAN PATENT APPLICATION

(11) **EP 1 350 433 A1**
(43) Date of publication of application: **08.10.2003**
(21) Application number: 02076361.1
(22) Date of filing: 05.04.2002
(51) Int. Cl.: A23C 9/15, A23C 9/154, A23C 19/076, A23C 9/13

(54) **Acid stable, dairy protein based, textured products**

(71) Applicant: QUEST INTERNATIONAL B.V., 1411 GP Naarden (NL)
(72) Inventor: Bourke, Neil Joseph, 1351 PA Almere-Haven (NL)
(74) Representative: van Westenbrugge, Andries

(57) **Abstract**

The invention relates to milk based textured systems which
a) are both physically stable with regard to the emulsion and the protein entity, over a wide pH range, in particular the lower pH range
b) have the ability to re-form their spreadable texture having been subjected to a texture destroying shear step, and
c) are based on a milk based system like yoghurt together with a protein protective system and a re-bodying system.

## Description

### Background of the state of the art:

Fermented dairy products such as yoghurt buttermilk quark and cream cheese owe their textural properties partly or wholly to milk gels. Milk protein (80: 20, casein : whey ratios) may be gelled by a number of methods including, but not exclusively, acid coagulation, enzyme coagulation, heat coagulation, ion exchange, or combinations of these.

The IEP (isoelectric point) of milk protein is commonly quoted as being reached at a pH of 4.6, and at this point there is said to be no net charge on the protein so that coagulation and resultant thickening occurs. This newly formed coagulated protein network has the ability to retain or trap a significant amount of water, and the familiar thick consistency of yoghurt is the final result. If however this milk gel is heated then the configuration of the milk protein gel is altered, with the result that it's water holding capacity is significantly reduced, accompanied by the all too familiar syneresis, or free milk serum.

In certain cases e.g. cream cheese production, concentrated milk systems are fermented and subsequently heated to ensure the product is endowed with an extended shelf life. In this case the milk solids level is increased significantly compared to that found in milk itself, and the water level reduced to a point where the heat / acid / enzyme coagulated milk gel is able to maintain the water in the cream cheese relatively immobilised. In the case where the solids and in particular the fat levels are reduced, the water retention ability of the remaining milk solids is stretched to it's limit, and gelling, thickening, stabilizing agents are used, as it were to "take up the slack", and keep the syneresis to a minimum. Even with these precautions the appearance of syneresis is common if not inevitable, and the further the denatured protein due to it's very nature, exerts a drying or astringent effect in the mouth.

A further aspect of the cream cheese manufacturing process is the pH at which the heat coagulation is optimally carried out. In general the final pH of these fermented dairy products lies between 4.5 and 4.9, which is as much a result of the type of bacterial culture used as the milk solids (and associated buffering / bacterial growth inhibition) level used. As it happens this is the pH, which is also optimal for the development of the overall structure, i.e. the spreadable rigidity and robustness, which is characteristic of cream cheese etc. The heat treatment required to impart an ultra long shelf life or an ambient stable shelf life for that matter would be so severe as to destroy the structure of the product, and / or to cause major processing problems for the manufacturer e.g. burning on, and or reduced processing times, etc,

Further the cream cheese process is a cumbersome process involving the following steps,
- standardisation of the milk base
- Pasteurization, cooling
- Inoculation
- Fermentation
- Dehydration, concentration
- Homogenization
- Pasteurisation (in Stephan Kettle)

Traditionally the raw materials used are milk and cream. The consistency of the obtained homogenized product is very viscous and handling is not the traditional "liquid handling" as is common in many dairy operations. The shelf life of the unopened product after pasteurization (at pH 4.8) is usually in the order of several weeks under refrigeration, and once the package is opened it's contents should be consumed, provided it is refrigerated, within a few days, as environmental spoilage microorganisms will cause rapid deterioration of the product.

Given the increasing desire of consumers to eat dairy products and in particular dairy based alternatives (where the dairy or milk fat is replaced by a non-dairy source), it behooves the food manufacturing sector to develop products and processes which are robust in manufacture and durable in the transport and distribution system.

A further aspect of this field is the interesting consumer angle of fruited variants of the above fermented dairy products. It is well known that fruit flavours e.g. strawberry, owe their flavour authenticity in a great part to the pH of the consumable system in which they are applied. A clear example of this is strawberry flavoured milk, pH 6.6, and strawberry flavoured yogurt, pH 4.1. The true character of the fresh strawberry flavour, given the current state of the art, can only be realized when the pH is lowered, coupled with a minimum "acid impression", and the pH range which is most feasible is between 3.5 and 4.5.

If fermented dairy products or dairy based alternatives are fermented or further chemically acidified to within these pH ranges and subsequently subjected to a heat treatment either to generate a new textural character or to impart an extended shelf life or both, then the protein will become so denatured that the whole product will be downgraded or totally wasted, due to de denaturation of the milk proteins. Certain hydrocolloids e.g. pectin and CMC are quoted in the literature as having protein stabilizing properties within limited pH ranges, e.g. 3.8-4.2 in the case of pectin, and apparently 4.5 in the case of CMC, and empirical studies and market products bear testimony to these functional properties. The use of these "stabilizers" obviates the need to declare them on ingredient labels, and comply with the specific processing conditions their use demands. Further the use of these products does require the use of high pressure homogenization, an particular unit operation which all but destroys the milk gel structure, resulting in thin, low viscosity products. This low viscosity excludes whole range of dairy or dairy based alternatives from being processed and flavoured in a manner which would expand their market reach, i.e. those which can be used as a spread or topping.

### Invention

Given the above constraints it has surprisingly been found that the disadvantages described in handling and processing can all be surmounted by the invention as described below.

Surprisingly it has been found that very low pH samples of dairy based alternatives can be manufactured, which
- can be flavoured with fruit flavours giving an authentic taste
- can be heat treated which causes a positive textural effect wrt thickening
- and that do not exhibit syneresis during use or storage

The invention relates to milk based textured systems which
a) are both physically stable with regard to the emulsion and the protein entity, over a wide pH range, in particular the lower pH range
b) have the ability to re-form their spreadable texture having been subjected to a texture destroying shear step, and
c) are based on a milk based system like yoghurt together with a protein protective system and a re-bodying system.

For obtaining microbiologically sterile products the products according to the invention can be subjected to a sterilisation procedure, for instance by means of an UHT (Ultra Heat Treatment). Products treated in this way are for instance resistant to mould growth.

The pH of the products according to the invention is preferably between 3.3 and 5.5, most preferably between 3.5 and 4.8.

The products according to the invention comprise stabilisers and emulsifiers, for instance fermented exopolysaccharide stabiliser/emulsifier based systems such as Enrich 221® together with a re-bodying system like Myvatex Mighty Spread®, being the subject matter of the non-prepublished EP No. 00 204 657.1.

Further, the product according to the invention contains additional whey, whey powder and/or concentrated whey products.

The invention will be illustrated by way of the following example:

### Example

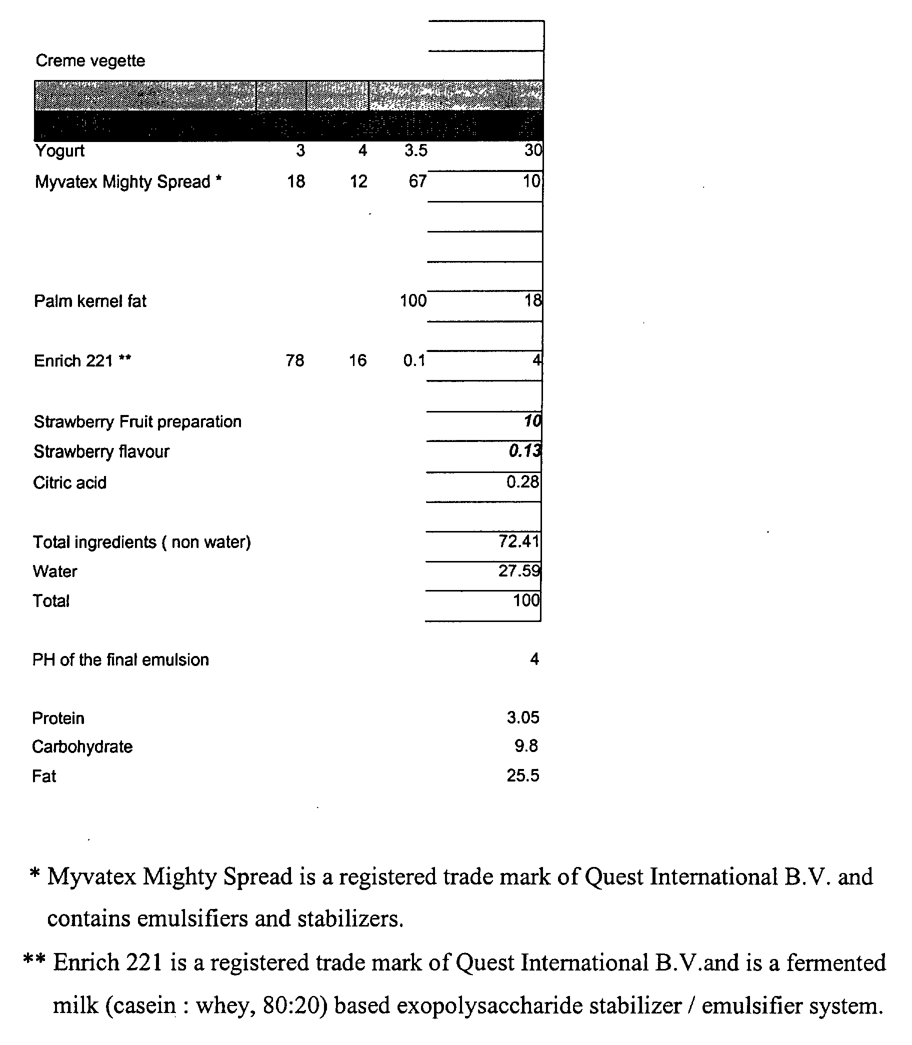

The obtained flavoured yoghurt had an authentic strawberry fruit taste. A heat treatment caused a positive textural effect on the product. Further, the obtained product did not exhibit any syneresis during storage for several weeks.

### Processing:

The dry ingredients were blended and added to the liquid ingredients, and stirred and heated to a temperature of 40°C. This constitutes the water phase. The melted fat was added to the water phase and the whole emulsion was subjected to a high shear mixing (ultra turrax). The emulsion was heated to 73°C and packed in tubs. After cooling, the emulsion exhibited a smooth spreadable texture and did not show any signs of syneresis during use or abuse i.e. temperature cycling.

Without wanting to be confined by the following, it is believed that the Enrich 221 imparts strong emulsification to the system, acts to colloidally protect all the protein in the edible emulsion at the low pH.

The Myvatex Mighty Spread ensures that the spreadable texture familiar to cream cheese etc can re-form after the high shear mixing treatment imparted to form the emulsion. It is believed that the crystallisation on cooling of the Myvatex Mighty Spread® and it's subsequent expansion is responsible for the re-bodying of the emulsion and the control of the syneresis.

In this experiment there is a normal, 80 : 20, casein to whey ( C:W) protein ratio in the final product, which is viewed as being technically challenging, Whereas often the whey protein levels are increased to provide some protection to the casein, this can have the effect of reducing the overall positive texture effect achieved during the controlled heating step. The result of this is that the taste and texture of high whey protein based, dairy based alternatives, leaves something to be desired compared to those made with unaltered C:W ratios.

## Claims

1. Milk based textured systems which
a) are both physically stable with regard to the emulsion and the protein entity, over a wide pH range, in particular the lower pH range
b) have the ability to re-form their spreadable texture having been subjected to a texture destroying shear step, and
c) are based on a milk based system like yoghurt together with a protein protective system and a re-bodying system.

2. Products according to claim 1 which have been subjected to an UHT (ultra heat treatment) resulting in microbiologically sterile products.

3. Product according to claim 1 which are resistant to mould growth.

4. Product according to claim 1 where the pH is between 3.3 and 5.5

5. Products according to claim 1 which contain fermented exopolysaccharide stabilizer / emulsifier based systems, such as Enrich 221®.

6. Products according to claim 1 which contain a re-bodying system like Myvatex Mighty Spread® or a product as described in European patent application No. 00 204 657.1.

7. Products according to claim 1 which contain additional whey, whey powder or concentrated whey products.
